# FASCICULE DE BREVET EUROPEEN

(11) **EP 1 208 401 B1**
(45) Date de publication et mention de la délivrance du brevet: **26.03.2003**
(21) Numéro de dépôt: 00956644.9
(22) Date de dépôt: 08.08.2000
(51) Int. Cl.: G02B 21/00, G01J 3/44, G02B 26/10

(54) **APPAREIL D'IMAGERIE SPECTROMETRIQUE**
VORRICHTUNG ZUR ERZEUGUNG SPEKTROSKOPISCHER BILDER
SPECTROMETRIC IMAGING APPARATUS

(30) Priorité: 11.08.1999 FR 9910406
(43) Date de publication de la demande: 29.05.2002
(73) Titulaire: Jobin Yvon S.A., 91160 Longjumeau (FR)
(72) Inventeur: DA SILVA, Edouard, F-59800 Lille (FR); DELHAYE, Michel, F-59493 Villeneuve d'Ascq (FR); LECLERCQ, Michel, F-77590 Bois Le Roi (FR); ROUSSEL, Bernard, F-59300 Valenciennes (FR)
(74) Mandataire: Catherine, Alain
(86) Numéro de dépôt international: FR0002278
(87) Numéro de publication internationale: WO01013157

(56) Documents cités:
- EP-A- 0 502 752
- FR-A- 2 754 341
- US-A- 4 523 799
- US-A- 5 192 980

## Description

La présente invention est relative à un appareil d'imagerie spectrométrique, en particulier du type Raman ou de fluorescence à bas niveau.

Dans la demande de brevet EP-A1-0.502.752, au nom de la demanderesse, il a été divulgué un dispositif de spectrométrie à balayage confocal, comprenant:
- un ensemble comportant:
   - un système d'éclairage et d'excitation incluant une première ouverture de confocalité,
   - un système optique,
   - une seconde ouverture de confocalité conjuguée de la première et
   - un premier et un second ensembles déflecteurs synchronisés, placés respectivement en amont et en aval de la seconde ouverture de confocalité, et
- un spectromètre comportant:
   - une fente d'entrée,
   - un disperseur spectral et
   - un détecteur multicanal bidimensionnel.

Une telle réalisation permet de réduire considérablement le temps d'analyse d'un échantillon par rapport à des dispositifs de spectrométrie confocale classiques. Le balayage ligne de l'objet peut être exploité grâce au balayage de la fente d'entrée du spectromètre par le faisceau lumineux. Le dispositif de cette demande antérieure offre également un facteur d'agrandissement, dû à l'utilisation de deux déflecteurs synchrones, qui permet de changer la dimension d'une image balayée dans un espace objet, depuis la dimension maximale couverte par l'objectif de l'ensemble de microscopie confocale jusqu'à une dimension très réduite qui est uniquement limitée par le seuil d'énergie détectable.

La présente invention vise un appareil d'imagerie spectrométrique permettant d'étendre l'application du dispositif connu par la précédente demande à tout le domaine spectral utile à la spectroscopie Raman, et pouvant avoir une utilisation plus facile que le dispositif antérieur.

A cet effet, l'invention concerne un appareil d'imagerie spectrométrique comprenant les caractéristiques récitées dans la première revendication.

Les revendications dépendantes définissent des modes de réalisation additionels.

Le second ensemble déflecteur est ainsi disposé en aval de l'entrée du spectromètre. Cette entrée est une ouverture de confocalité.

Les première et seconde ouvertures de confocalité sont préférentiellement constituées de trous ajustables, obtenus par des moyens tels que des diaphragmes par transmission ou réflexion. Elles sont approximativement circulaires et de petites dimensions

Par rapport au dispositif connu, décrit dans la demande EP-A1-0.502.752, l'imageur de l'invention simplifie le montage en diminuant le nombre de pièces optiques, ce qui est un important avantage en particulier dans le domaine ultraviolet, et en supprimant une ouverture de confocalité séparée.

De plus, l'appareil d'imagerie spectrométrique selon l'invention présente l'avantage de pouvoir être intégré dans un appareil dit à l'infini, qui met en jeu des faisceaux parallèles. Ainsi, les éléments de l'imageur de l'invention peuvent être insérés sous forme de blocs dans des dispositifs préexistants comportant un microscope à l'infini et/ou dans un spectromètre à l'infini.

Préférentiellement, l'appareil d'imagerie spectrométrique de l'invention est prévu pour de la spectroscopie Raman ou de fluorescence à bas niveau.

Le spectromètre dispersif est préférentiellement stigmatique, c'est-à-dire qu'il donne, pour chaque point de l'ouverture d'entrée, une image spectrale couvrant une ligne de pixels d'un détecteur multicanal bidimensionnel.

De préférence, le premier ensemble déflecteur comprend une optique sensiblement afocale et est placé sur un faisceau parallèle.

Ainsi, ce premier ensemble déflecteur n'introduit pas de perte de signal. Il permet d'assurer à la fois:
- une déflexion d'un faisceau,
- le report de pupilles.

Le premier ensemble déflecteur peut être du type réfractif ou réflectif (c'est-à-dire fonctionnant respectivement en réfraction ou en réflexion).

Selon un mode de réalisation de l'optique afocale, celle-ci comprend une lentille convergente, une lentille divergente et un premier déflecteur réfractif placé entre ces lentilles.

Dans un autre mode de réalisation de l'optique afocale, celle-ci comprend des miroirs et un premier déflecteur en réflexion apte à recevoir de l'un de ces miroirs un faisceau parallèle et à réfléchir ce faisceau parallèle vers un autre des miroirs.

Les miroirs comprennent avantageusement des miroirs sphériques.

Dans une forme de réalisation, le premier ensemble déflecteur comprend un premier déflecteur qui, au moyen d'éléments optiques, est prévu pour effectuer un balayage à deux dimensions sur un échantillon. Notamment, en combinaison avec les deux modes de réalisation précitées de l'optique afocale, le premier déflecteur est alors capable de balayer sur un échantillon des trames, dans une direction perpendiculaire aux lignes.

Dans une autre forme de réalisation, obtenue à partir d'un des modes de réalisation precitées de l'optique afocale:
- le premier ensemble déflecteur comprend des moyens de translation des lentilles ou des miroirs, permettant de balayer cette ligne dans une direction perpendiculaire à cette ligne.

Le balayage de la ligne par le premier déflecteur est alors par exemple réalisé par la rotation d'un élément optique.

On peut ainsi distinguer deux exemples des deux premiers modes de réalisation de l'optique afocale:
- soit le premier déflecteur effectue un balayage de trame perpendiculaire à ces lignes,
- soit le premier déflecteur effectue un balayage d'une ligne et les éléments associés dans l'optique afocale effectuent un balayage perpendiculaire à cette ligne; la déflexion obtenue par ces éléments, dite déflexion trame, est alors beaucoup plus lente que celle produite par le premier déflecteur, dite déflexion ligne (la fréquence de déflexion ligne est un multiple de la fréquence de déflexion trame).

La réalisation avec les moyens de transition des lentilles ou des miroirs permet de simplifier le système en réduisant le nombre de composants.

Dans une variante de réalisation, le premier déflecteur est capable de balayer une ligne sur un échantillon, par exemple par la rotation d'un élément optique, et il est lui-même monté sur un dispositif mobile, permettant de déplacer cette ligne, sur l'objet, dans une direction perpendiculaire à cette ligne (balayage de trame).

II est intéressant que le premier ensemble déflecteur produise également un balayage selon une troisième dimension, parallèle au faisceau (analyse en profondeur de l'échantillon) permettant ainsi la génération d'images confocales spectrales en trois dimensions.

Le second ensemble déflecteur, placé dans le spectromètre, réalise une déviation constituant une déflexion ligne (perpendiculaire aux lignes de réseau formées sur le détecteur multicanal), qui est synchrone avec celle effectuée par le premier ensemble déflecteur. Ce second ensemble déflecteur est réflectif dans un mode de réalisation. Il permet ainsi de réduire les effets de lumière parasites. Dans un mode de réalisation, le second ensemble déflecteur est réfractif.

Dans un autre mode de réalisation, les premier et second ensembles déflecteurs produisent des déflexions synchrones ayant des amplitudes variables autorisant un changement de grossissement.

Un déplacement contrôlé dans l'axe du microscope permet de générer des images confocales spectrales en trois dimensions.

Dans un autre mode de réalisation du second ensemble déflecteur, celui-ci est placé entre l'ouverture d'entrée du spectromètre et le détecteur multicanal.

Ainsi, dans une forme de ce premier mode de placement, le spectomètre comprend une première lentille ou collimateur et le second ensemble déflecteur est disposé entre l'ouverture d'entrée et cette première lentille. Cette forme de réalisation est facile à mettre en oeuvre.

Dans une autre forme de ce mode de réalisation, le spectomètre comprend un premier miroir sphérique en amont du disperseur spectral et le second ensemble déflecteur est placé entre l'ouverture d'entrée et ce miroir sphérique.

Dans un mode de placement particulier du second ensemble déflecteur, celui-ci est placé entre le disperseur spectral et le détecteur multicanal.

Dans un autre mode de réalisation du second ensemble déflecteur, celui-ci est constitué par au moins une partie du disperseur spectral lui-même. La déflexion peut alors être obtenue par une oscillation du disperseur spectral ou de l'un de ses éléments optiques ou par un dispositif croisé avec ce disperseur.

Selon un autre mode de réalisation du second ensemble déflecteur, celui-ci est constitué par le détecteur multicanal. Le second ensemble déflecteur utilise alors le transfert des charges sur un circuit à couplage de charges (CCD) du détecteur multicanal. On prévoit que le détecteur soit à commande séquentielle et que le premier ensemble déflecteur soit à commande " pas à pas ", afin d'obtenir facilement une synchronisation des deux ensembles déflecteurs.

Selon un autre mode de réalisation, l'imageur comprend une fibre optique placée entre le premier et le deuxième ensembles déflecteurs synchrones, couplée à l'ouverture d'entrée du spectromètre et destinée à transporter à distance les informations qui permettent de construire une image spatiale confocale.

Ainsi, la seconde ouverture de confocalité peut être projetée sur la fibre optique, qui transporte les informations. Il convient alors de transporter ou de contrôler la phase du balayage pour assurer la synchronisation des déflecteurs.

L'invention sera mieux comprise et illustrée à l'aide d'exemples non limitatifs en référence aux dessins annexés sur lesquels:
- la Figure 1 représente un schéma d'ensemble d'un premier mode de réalisation d'un appareil d'imagerie spectrométrique selon l'invention et son utilisation;
- la Figure 2 illustre un premier mode de réalisation du premier ensemble déflecteur de l'imageur de la Figure 1;
- la Figure 3 illustre un deuxième mode de réalisation réflectif du premier ensemble déflecteur de l'imageur de la Figure 1;
- la Figure 4 montre en perspective simplifiée le déflecteur du premier ensemble déflecteur de la Figure 3;
- la Figure 5 représente en vue frontale le déflecteur du premier ensemble déflecteur de la Figure 3;
- la Figure 6 montre en vue latérale le déflecteur du premier ensemble déflecteur de la Figure 3;
- la Figure 7 représente un troisième mode de réalisation du premier ensemble déflecteur de l'appareil de la Figure 1 et
- la Figure 8 illustre un second mode de réalisation d'un appareil d'imagerie spectrométrique selon l'invention.

Un appareil d'imagerie spectrométrique selon l'invention comprend un système d'éclairage microscopique 1 et un spectromètre 2. Le système d'éclairage microscopique 1 comporte une source d'excitation telle qu'un laser 10 associé à une première ouverture de confocalité, telle qu'un trou ajustable en taille et en position. Le système 1 comprend également un objectif de microscope 11, vers lequel est dirigé un faisceau laser émis par le laser 10 après filtrage spatial par l'ouverture 15, réflexion sur séparateur partiellement réfléchissant 12 et réflexion sur un miroir plan 13. Le système 1 comprend aussi un premier ensemble déflecteur 31, permettant de balayer un échantillon 3 selon une, deux ou trois dimensions.

Le système 1 dispose également d'un second système optique conduisant un faisceau émis par l'échantillon 3, collecté par l'objectif de microscope 11 et transmis par le séparateur 12, vers le spectromètre 2. Ce second système optique comprend, par exemple, une optique convergente 14.

Le spectromètre 2 est un spectromètre multicanal équipé d'un détecteur bidimensionnel 23. Le plus souvent le détecteur bidimensionnel est associé à des moyens de traitement qui collectent les signaux qu'il produit en temps réel et peuvent en fournir une représentation soit en temps réel soit en temps différé. Dans la suite de ce texte on désignera généralement par détecteur le convertisseur photoélectrique lui même et les moyens de traitement associés. Le spectromètre comprend une ouverture d'entrée 25, qui constitue une seconde ouverture de confocalité conjuguée de la première ouverture 15 de confocalité. On appelle ouverture de confocalité un trou de faible dimension approximativement circulaire, formé dans un cache. La seconde ouverture de confocalité 25 tient donc ici, dans le spectromètre, le rôle habituellement dévolue à une fente dans les spectromètres à réseau.
Le spectromètre comprend aussi une première optique 21 ou collimateur et un disperseur spectral 22, sous forme de réseau de diffraction. Un tel réseau de diffraction est formé de traits parallèles entre eux. Un faisceau lumineux parallèle incident sur le réseau est dispersé dans le plan de dispersion qui est perpendiculaire aux traits du réseau. Le spectromètre est équipé d'un second ensemble déflecteur 32, disposé dans l'exemple représenté entre l'ouverture d'entrée 25 et l'optique 21.

En fonctionnement, on envoie un faisceau laser émis par le laser 10 et dévié par l'ensemble déflecteur 31 vers l'échantillon 3. Ce faisceau balaie une ligne 40 de l'échantillon 3. Le flux lumineux Raman diffusé successivement par chacun des points de cette ligne 40 de l'échantillon est collecté par l'objectif du microscope 11 et focalisé, après passage par le premier ensemble déflecteur 31, en un point d'entrée du disperseur spectral 22.

Le second ensemble déflecteur 32, synchronisé avec le premier produit un balayage parallèle aux traits du réseau et adresse le spectre lumineux 43 issu de chaque point de la ligne 40 balayée sur une ligne du détecteur 23.

On obtient ainsi sur le détecteur 23 verticalement, par exemple, la répartition spatiale de la ligne 40 (ligne 41) et horizontalement, les données spectrales 43 (lignes 42).

Le second ensemble déflecteur 32 est en pratique ajusté pour que sa déflexion sur le détecteur 23 corresponde à la dimension verticale de ce dernier et le premier ensemble déflecteur 31, synchrone avec l'ensemble déflecteur 32, est ajusté entre zéro et une valeur maximale limitée par le champ de l'objectif (la valeur zéro correspondant à l'analyse d'un point).

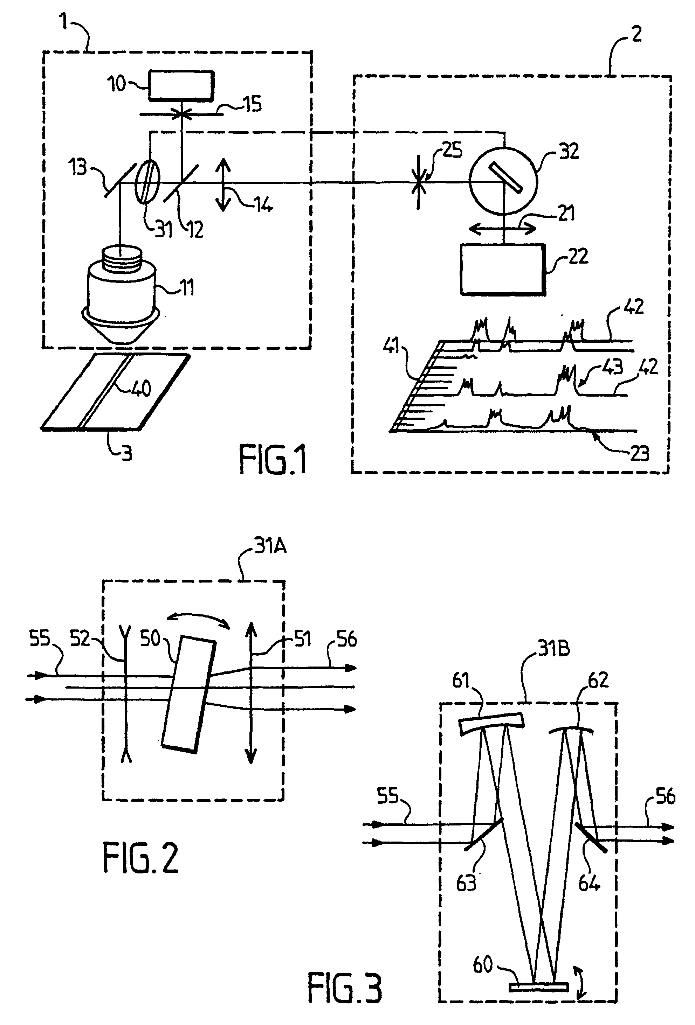

Le premier ensemble déflecteur 31 comprend une optique afocale. Dans un premier mode de réalisation de cette optique afocale (Figure 2), ce premier ensemble déflecteur référencé 31A comprend un déflecteur réfractif 50 placé entre une lentille convergente 51 et une lentille divergente 52. Les lentilles 51 et 52 ont respectivement des distances focales voisines l'une de l'autre. Le premier ensemble déflecteur 31A est tel qu'un faisceau parallèle 55 incident ressort sous la forme d'un faisceau quasi-parallèle 56 dévié. Dans ce mode de réalisation, les lentilles 51 et 52 sont fixes et le déflecteur 50 produit les déflexions voulues.

Dans un exemple du premier ensemble déflecteur 31, référencé 31B (Figure 3), celui-ci comprend un déflecteur réflectif 60 et deux miroirs sphériques 61 et 62, disposés par exemple respectivement en amont et en aval du déflecteur 60. L'ensemble déflecteur 31B peut comprendre également deux miroirs plans 63 et 64 disposés respectivement en amont et en aval des miroirs sphériques 61 et 62. L'ensemble forme une optique afocale en association avec le déflecteur 60, et donne ainsi un faisceau parallèle 56 à partir d'un faisceau parallèle 55 en entrée.

Les miroirs 61-64 sont fixes, tandis que le déflecteur 60 effectue le ou les balayage(s) voulu(s).

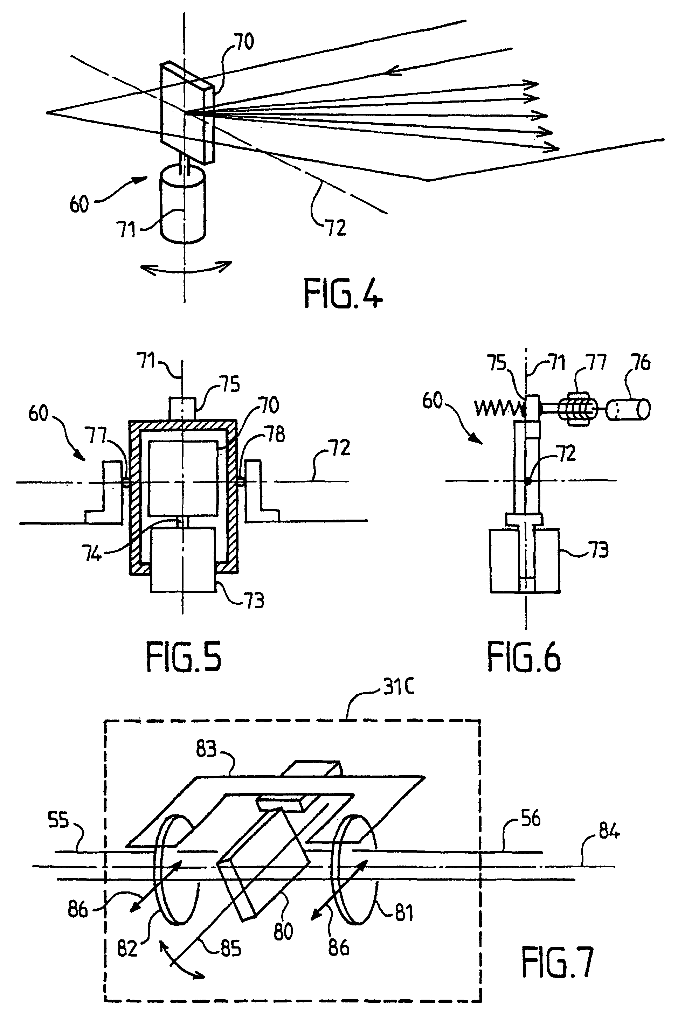

De préférence, le déflecteur 60, qui comprend, par exemple, un miroir plan 70, est mobile en rotation autour d'un premier axe 71, permettant un balayage trame (c'est-à-dire parallèle aux traits du réseau de diffraction sur le déflecteur multicanal 23), et autour d'un second axe 72, permettant un balayage ligne (c'est-à-dire un balayage perpendiculaire aux traits du réseau de diffraction sur le détecteur multicanal 23) (voir Figure 4). Dans un exemple de réalisation de ce déflecteur 60 (Figures 5 et 6), celui-ci comprend un moteur 73 actionnant en rotation le miroir 70 autour de l'axe 71 par l'intermédiaire d'un arbre 74, et un second moteur 76 actionnant le miroir 70 en rotation autour du second axe 72, par exemple au moyen de billes 77 et 78 disposées latéralement par rapport au miroir 70, et d'un dispositif de rappel élastique agissant sur une pièce 75 disposée au-dessus du miroir 70. Ce moteur 76 est alors préférentiellement un moteur pas à pas.

Lorsque le premier déflecteur assure un balayage de l'objet dans deux dimensions, le deuxième déflecteur est toujours synchronisé sur le balayage de cet objet dans une direction, par exemple le balayage ligne. Le détecteur produit alors successivement les informations spectrales provenant des différentes lignes. Ces informations sont acquises par une unité de traitement qui y est associée et qui est donc à même de présenter les informations du spectre diffusé par les points des deux dimensions de l'échantillon sous toute forme voulue. On comprend que tout moyen permettant le balayage de l'objet dans trois dimensions peut être exploité de façon analogue. Le balayage du plan transverse a été décrit sous forme de ligne et trame, ce qui est préférable mais n'importe quel balayage, du plan entier permet d'obtenir la réalisation d'une image.

Dans un autre mode de réalisation du premier ensemble déflecteur 31, référencé 31C (Figure 7), celui-ci comprend un déflecteur réfractif 80 placé entre deux lentilles 81 et 82, respectivement convergente et divergente. Les lentilles 81 et 82 et le déflecteur 80 étant alignés selon un axe 84, le déflecteur 80 est mobile en rotation autour d'un axe de rotation 85 perpendiculaire à l'axe d'alignement 84, de manière à permettre un balayage ligne, De plus, le premier ensemble déflecteur 31C comprend des moyens de translation 83 des lentilles 81 et 82 selon une direction 86 parallèle à l'axe de rotation 85, pour le balayage trame, qui est beaucoup plus lent que le balayage ligne (la fréquence de déflexion ligne est un multiple entier de la fréquence de déflexion trame). Ce premier ensemble déflecteur 31C forme ainsi un système compact afocal comprenant un nombre de composants réduit, et donnant un faisceau parallèle 56 à partir d'un faisceau parallèle d'incident 55.

Dans un exemple de réalisation du premier ensemble déflecteur (non représenté), l'exemple de réalisation 31B du premier ensemble déflecteur est adapté de manière similaire, en rendant les miroirs sphériques 61 et 62 mobiles, ce qui permet de limiter les mouvements de déflexion du déflecteur 60 au balayage ligne seulement.

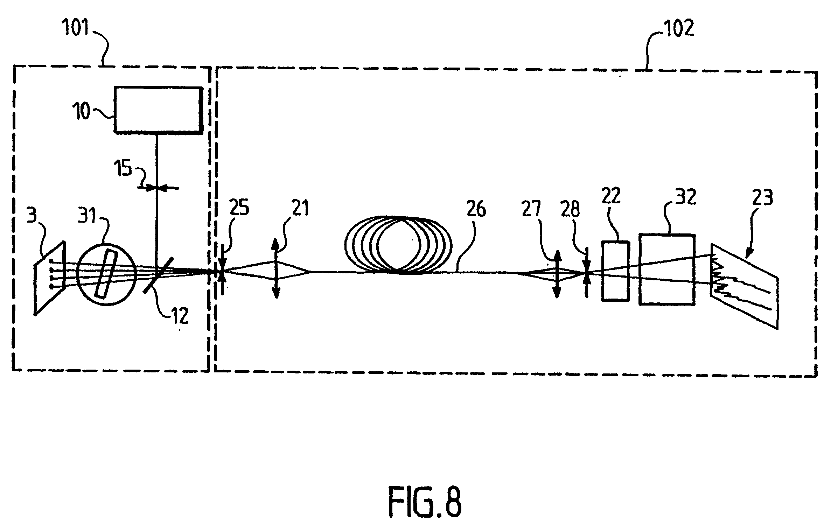

Dans un autre mode de réalisation de l'Appareil d'imagerie spectrométrique (Figure 8), des éléments identiques ou similaires étant désignés par les mêmes références, cet appareil comprend un système de microscopie confocale 101 et un spectromètre 102. Le spectromètre 102 comprend, outre l'ouverture d'entrée 25, le collimateur 21, le disperseur spectral 22 et le détecteur multicanal 23, une fibre optique 26 couplant le collimateur 21 à une seconde lentille 27 en sortie de la fibre optique 26, un diaphragme 28 et le second ensemble déflecteur 32, disposé entre le disperseur spectral 22 et le détecteur 23.

Ainsi la fibre optique, placée entre le premier et le deuxième ensembles déflecteurs transporte à distance les informations qui permettent de construire une image spectrale confocale.

Le second ensemble déflecteur 32, synchrone avec le premier ensemble déflecteur 31, est placé en aval de l'ouverture d'entrée 25. Dans des exemples de réalisation, il est placé entre l'ouverture d'entrée 25 et le disperseur 22, sur le disperseur 22 ou confondu avec lui, entre le disperseur 22 et le détecteur 23 ou sur le détecteur 23 ou confondu avec lui.

Des modes de réalisation particulièrement avantageux sont donnés par les combinaisons suivantes. Dans les cas où le second ensemble déflecteur 32 est placé entre l'ouverture d'entrée 25 et le disperseur 22 ou sur le disperseur 22, ou encore entre le disperseur 22 et le détecteur 23 ou sur le détecteur 23, on choisit le premier mode de réalisation de l'imageur (figure 1), qui permet de travailler sur un faisceau plus petit que le second mode de réalisation (figure 8), et on utilise de préférence des déflecteurs par réflexion (figures 3 à 6).

Dans le cas où le second ensemble déflecteur 32 est confondu avec le disperseur 22, on utilise par exemple des déflecteurs mécaniques ou piézo-électriques. En effet, la déflexion angulaire est alors faible.

## Revendications

1. Appareil d'imagerie spectrométrique comprenant:
un ensemble d'éclairage microscopique comportant:
• un système d'éclairage et d'excitation incluant une première ouverture (15) de confocalité,
• un système optique,
• une seconde ouverture (25) de confocalité conjuguée de la première (15) et
• un premier ensemble déflecteur (31) capable de balayer sur un échantillon (3) des lignes (40) et un second ensemble déflecteur (32) synchronisé, placés respectivement en amont et en aval de la seconde ouverture (25) de confocalité, éclairant
un spectromètre (2, 102) comportant:
• une ouverture d'entrée
• un disperseur spectral (22) et
• un détecteur multicanal (23) bidimensionnel,
**caractérisé en ce que** l'ouverture d'entrée du spectromètre (2, 102) est confondue avec la seconde ouverture (25) de confocalité.

2. Appareil d'imagerie spectrométrique selon la revendication 1, **caractérisé en ce qu'**il est prévu pour de la spectroscopie Raman ou de fluorescence à bas niveau.

3. Appareil d'imagerie spectrométrique selon l'une des revendications 1 et 2, **caractérisé en ce que** le premier déflecteur (50, 60) est capable de balayer sur un échantillon (3) des trames dans une direction perpendiculaire auxdites lignes (40).

4. Appareil d'imagerie spectrométrique selon l'une quelconque des revendications 1 à 3, **caractérisé en ce que** le premier ensemble déflecteur (31) comprend une optique sensiblement afocale et est placé sur un faisceau parallèle (55, 56).

5. Appareil d'imagerie spectrométrique selon la revendication 4, **caractérisé en ce que** ladite optique afocale (31A) comprend une lentille convergente (51), une lentille divergente (52) et un premier déflecteur (50) en réfraction placés entre lesdites lentilles (51, 52).

6. Appareil d'imagerie spectrométrique selon la revendication 4, **caractérisé en ce que** ladite optique afocale (31B) comprend des miroirs (61-64) et un premier déflecteur (60) en réflexion apte à recevoir de l'un desdits miroirs (61) ledit faisceau parallèle (55) et à le réfléchir vers l'autre desdits miroirs (62).

7. Appareil d'imagerie spectrométrique selon l'une des revendications 5 et 6, **caractérisé en ce que**:
- le premier ensemble déflecteur (31) comprend des moyens de translation (83) desdits lentilles (81, 82) ou miroirs, permettant de balayer ladite ligne (40) dans une direction perpendiculaire à ladite ligne (40).

8. Appareil d'imagerie spectrométrique selon l'une quelconque des revendications précédentes, **caractérisé en ce que** les premier et second ensembles déflecteurs (31, 32) sont arrangés pour produire des déflexions synchrones ayant des amplitudes variables autorisant un changement de grossissement.

9. Appareil d'image spectrométrique selon l'une quelconque des revendications précédentes, **caractérisé par** des moyens permettant un déplacement contrôlé dans l'axe du microscope permettant de générer des images confocales spectrales en trois dimensions.

10. Appareil d'imagerie spectrométrique selon l'une quelconque des revendications précédentes, **caractérisé en ce que** le second ensemble déflecteur (32) est placé entre l'ouverture d'entrée (25) du spectromètre (2) et le détecteur multicanal (23).

11. Appareil d'imagerie spectrométrique selon l'une quelconque des revendications 1 à 10, **caractérisé en ce que** le second ensemble déflecteur est constitué par au moins une partie du disperseur spectral.

12. Appareil d'imagerie spectrométrique selon l'une quelconque des revendications 1 à 9, **caractérisé en ce que** le second ensemble déflecteur est constitué par le détecteur multicanal (23).

13. Appareil d'imagerie spectrométrique selon l'une quelconque des revendications précédentes, **caractérisé en ce qu'**il comprend une fibre optique (26) placée entre le premier et le deuxième ensembles déflecteurs (31, 32), couplée à l'ouverture d'entrée (25) du spectromètre (102) et destinée à transporter à distance les informations qui permettent de construire une image spatiale confocale.

## Claims

1. A spectrometric imaging apparatus comprising:
a microscopic illuminating assembly having :
• an illuminating and energising system including a first confocal aperture (15),
• an optical system,
• a second confocal aperture (25) combined with the first (15) and
• a first deflector assembly (31) capable of scanning lines (40) on a sample (3) and a second deflector assembly (32) synchronised, located respectively upstream and downstream of the second confocality aperture (25), illuminating
a spectrometer (2, 102) comprising:
• an input aperture,
• a spectral disperser (22) and
• a two-dimensional multichannel detector (23).
**characterised in that** the input aperture of the spectrometer (2, 102) is combined with the second confocal aperture (25).

2. A spectrometric imaging apparatus according to claim 1, **characterised in that** it is intended for Raman, or low level fluorescence spectroscopy.

3. A spectrometric imaging apparatus according to one of claims 1 and 2, **characterised in that** the first deflector (50, 60) is capable of scanning frames on a sample (3) in a direction perpendicular to the said lines (40).

4. A spectrometric imaging apparatus according to any one of claims 1 to 3, **characterised in that** the first deflector assembly (31) comprises a substantially afocal optics and is located on a parallel beam (55, 56).

5. A spectrometric imaging apparatus according to claim 4, **characterised in that** the said afocal optics (31A) comprises a converging lens (51), a diverging lens (52) and a first refraction deflector (50) located between the said lenses (51, 52).

6. A spectrometric imaging apparatus according to claim 4, **characterised in that** the said afocal optics (31B) comprises mirrors (61-64) and a first reflection deflector (60) capable of receiving from one of the said mirrors (61) the said parallel beam (55) and of reflecting the said beam towards the other mirror (62).

7. A spectrometric imaging apparatus according to one of claims 5 and 6, **characterised in that**
- the first deflector assembly (31) comprises translation means (83) for the said lenses (81, 82) or mirrors, enabling to scan the said line (40) in a direction perpendicular to the said line (40).

8. A spectrometric imaging apparatus according to any one of the previous claims, **characterised in that** the first and second deflector assemblies (31, 32) are provided to produce synchronous deflections with variable amplitudes allowing a changing in the enlargement.

9. A spectrometric imaging apparatus according to any one of the previous claims, **characterised by** means allowing a controlled displacement along the axis of the microscope enabling to generate three-dimensional spectral confocal images.

10. A spectrometric imaging apparatus according to any one of the previous claims, **characterised in that** the second deflector assembly (32) is located between the input aperture (25) of the spectrometer (2) and the multichannel detector (23).

11. A spectrometric imaging apparatus according to any one of claims 1 to 10, **characterised in that** the second deflector assembly comprises an least a portion of the central disperser.

12. A spectrometric imaging apparatus according to any one of claims 1 to 9, **characterised in that** the second deflector assembly comprises the multichannel detector (23).

13. A spectrometric imaging apparatus according to any one of the previous claims, **characterised in that** it comprises an optical fibre (26) located between the first and the second deflector assemblies (31, 32) coupled to the input aperture (25) of the spectrometer (102) and intended for remote transport of the information enabling to build a confocal spatial image.

## Patentansprüche

1. Vorrichtung zur Erzeugung spektrometrischer Bilder, enthaltend:
eine Einheit zur mikroskopischen Beleuchtung, umfassend:
- ein System zur Beleuchtung und Erregung, das eine erste Konfokalifätsöffnung (15) einschließt,
- ein optisches System,
- eine zweite Konfokalitätsöffnung (25), die mit der ersten (15) gekoppelt ist, und
- eine erste Deflektoreinheit (31), die in der Lage ist, auf einem Muster (3) Linien (40) abzutasten, und eine zweite synchron geschaltete Deflektoreinheit (32), die im Vorbereich bzw. im Nachbereich der zweiten Konfokalltätsöffnung (25) angeordnet sind,
und deleuchtend :
ein Spektrometer (2, 102), umfassend:
- eine Eintrittsöffnung
- eine Spektraldispergiereinrichtung (22) und
- einen zweidimensionalen Mehrkanaldetektor (23),
**dadurch gekennzeichnet, dass** die Eintrittsöffnung des Spektrometers (2, 102) mit der zweiten Konfokalitätsöffnung (25) zusammenfällt.

2. Vorrichtung zur Erzeugung spektrometrischer Bilder nach Anspruch 1, **dadurch gekennzeichnet, dass** sie für die Raman-Spektroskopie oder die Fluoreszenz-Spektroskopie auf geringem Niveau vorgesehen ist.

3. Vorrichtung zur Erzeugung spektrometrischer Bilder nach einem der Ansprüche 1 und 2, **dadurch gekennzeichnet, dass** der erste Deflektor (50, 60) in der Lage ist, in einem Muster (3) Raster in einer Richtung senkrecht zu den Linien (40) abzutasten.

4. Vorrichtung zur Erzeugnung spektrometrischer Bilder nach einem der Ansprüche 1 bis 3, **dadurch gekennzeichnet, dass** die erste Deflektoreinheit (31) eine im Wesentlichen afokale Optik umfassf und in einem porallelen Strahlenbündel (55, 56) angeordnet ist.

5. Vorrichtung zur Erzeugung spektrometrischer Bilder nach Anspruch 4, **dadurch gekennzeichnet, dass** die afokale Optik (31A) eine konvergente Linse (51), eine divergente Linse (52) und einen ersten Deflektor (50) mit Refraktion umfasst, der zwischen den Linsen (51, 52) angeordnet ist.

6. Vorrichtung zur Erzeugung spektrometrischer Bilder nach Anspruch 4, **dadurch gekennzeichnet, dass** die afokale Optik (31B) Spiegel (61-64) und einen ersten Deflektor (60) mit Reflexion umfasst, der in der Lage ist, von einem der Spiegel (61) das parallele Strohlenbündel (55) zu empfangen und dieses zu dem anderen der Spiegel (62) zu reflektieren.

7. Vorrichtung zur Erzeugung spektrometrischer Bilder nach einem der Ansprüche 5 und 6, **dadurch gekennzeichnet, dass**:
- die erste Deflektoreinhelt (31) Translationsmittel (83) für die Unsen (81, 82) oder Spiegel umfasst, die es ermöglichen, die Linie (40) in einer Richtung senkrecht zu der Linie (40) abzutasten.

8. Vorrichtung zur Erzeugung spektrometrischer Bilder nach einem der vorstehenden Ansprüche, **dadurch gekennzeichnet, dass** die erste und die zweite Deflektoreinheit (31, 32) derart angeordnet sind, dass sie synchrone Deflexionen mit variablen Amplituden erzeugen, die eine Vergrößerungsänderung gestatten.

9. Vorrichtung zur Erzeugung spektrometrischer Bilder nach einem der vorstehenden Ansprüche, **gekennzeichnet durch** Mittel, die eine kontrollierte Verschiebung in der Achse des Mikroskops ermöglichen, die es gestattet, konfokale dreidimensionale Spektralbilder zu erzeugen.

10. Vorrichtung zur Erzeugung spektrometrischer Bilder noch einem der vorstehenden Ansprüche, **dadurch gekennzeichnet, dass** die zweite Deflektoreinheit (32) zwischen der Eintrittsöffnung (25) des Spektrometers (2) und dem Mehrkonaldetektor (23) angeordnet ist.

11. Vorrichtung zur Erzeugung spektrometrischer Bilder nach einem der Ansprüche 1 bis 10, **dadurch gekennzeichnet, dass** die zweite Deflektoreinheit aus mindestens einem Teil der Spektraldispergiereinrichtung gebildet ist.

12. Vorrichtung zur Erzeugung spektrometrischer Bilder nach einem der Ansprüche 1 bis 9, **dadurch gekennzeichnet, dass** die zweite Deflektoreinheit aus dem Mehrkanaldetektor (23) gebildet ist.

13. Vorrichtung zur Erzeugung spektrometrischer Bilder nach einem der vorstehenden Ansprüche, **dadurch gekennzeichnet, dass** sie eine optische Faser (26) umfasst, die zwischen der ersten und der zweiten Deflektoreinheit (31, 32) angeordnet, mit der Eintrittsöffnung (25) des Spektrometers (102) gekoppelt und dazu bestimmt ist, die informationen, die es ermöglichen, ein konfokales räumliches Bild zu erzeugen, über eine Distanz zu befördern.
